# EUROPEAN PATENT APPLICATION

(11) **EP 4 564 707 A1**
(43) Date of publication of application: **04.06.2025**
(21) Application number: 24154443.6
(22) Date of filing: 29.01.2024
(51) Int. Cl.: H04B 10/40, H04B 10/61, H04B 10/69, H04B 10/25

(54) **OPTICAL TRANSCEIVER MODULE AND OPTICAL TRANSCEIVER MODULE START-UP METHOD**

(30) Priority: 01.12.2023 TW 112146904
(71) Applicant: Jess-Link Products Co., Ltd., New Taipei City 235 (TW)
(72) Inventor: SUN, Chi-Hsien, 235 New Taipei City (TW); CHENG, Chieh-Ming, 235 New Taipei City (TW); WU, Pei-Fang, 235 New Taipei City (TW)
(74) Representative: 2K Patentanwälte Blasberg Kewitz & Reichel

(57) **Abstract**

An optical transceiver module (10) includes a light transmitting-side circuit (102), a light receiving-side circuit (104), and a microcontroller (106). The microcontroller (106) transmits a light transmitting-side start-up signal (S1) to the light transmitting-side circuit (102) to start the light transmitting-side circuit (102), and after the microcontroller (106) transmits the light transmitting-side start-up signal (S1) to the light transmitting-side circuit (102), the microcontroller (106) transmits a light receiving-side start-up signal (S3) to the light receiving-side circuit (104) after a first delay duration to start the light receiving-side circuit (104).

## Description

### BACKGROUND OF THE DISCLOSURE

### Technical Field

The present disclosure relates to a module and a module start-up method, and especially relates to an optical transceiver module and an optical transceiver module start-up method.

### Description of Related Art

A related art optical transceiver module usually includes at least a laser diode driver, a laser diode, a photodiode, and a preamplifier. In the light-transmitting part, the laser diode driver drives the laser diode to transmit the light signals. In the light-receiving part, the photodiode converts the received light signals into the electrical signals, and then the preamplifier amplifies the electrical signals.

When the related art optical transceiver module is started, all components of the related art optical transceiver module have a start-up (namely, power-on) sequence. For example, the start-up sequence of the above-mentioned components is: the preamplifier of the light-receiving part, the photodiode of the light-receiving part, the laser diode driver of the light-transmitting part, and the laser diode of the light-transmitting part.

However, an inrush current is generated at the moment when the component is started. The related art optical transceiver module that starts the above-mentioned components through the above-mentioned start-up sequence often causes an instrument or a computer connected to the related art optical transceiver module through a network card to shut down for protection due to the excessive inrush current generated at the moment when the above-mentioned components are started.

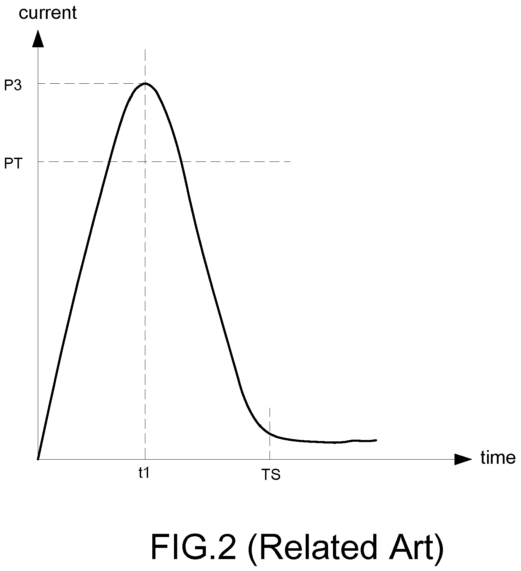

Fig. 2 shows a waveform diagram of the inrush current generated at the start-up moment of the related art optical transceiver module. A total start-up duration TS (as shown in Fig. 2) required from a start-up of the preamplifier to a start-up completion of the laser diode may be, for example, one second. The peak value of the inrush current at the first timing point t1 is the third peak value P3. Because the third peak value P3 is too high (for example, higher than the peak threshold value PT), therefore when the related art optical transceiver module is started, the instrument or the computer connected to the related art optical transceiver module through the network card is shut down for protection, and this problem needs to be solved urgently.

### SUMMARY OF THE DISCLOSURE

In order to solve the above-mentioned problems, an object of the present disclosure is to provide an optical transceiver module.

In order to solve the above-mentioned problems, another object of the present disclosure is to provide an optical transceiver module start-up method.

In order to solve the above-mentioned problems, still another object of the present disclosure is to provide an optical transceiver module start-up method.

In order to achieve the object of the present disclosure mentioned above, the optical transceiver module of the present disclosure includes a light transmitting-side circuit, a light receiving-side circuit, and a microcontroller. The microcontroller is electrically connected to the light transmitting-side circuit and the light receiving-side circuit. The microcontroller is configured to transmit a light transmitting-side start-up signal to the light transmitting-side circuit to start the light transmitting-side circuit, and after the microcontroller transmits the light transmitting-side start-up signal to the light transmitting-side circuit, the microcontroller is configured to transmit a light receiving-side start-up signal to the light receiving-side circuit after a first delay duration to start the light receiving-side circuit.

Moreover, in an embodiment of the optical transceiver module of the present disclosure mentioned above, the light transmitting-side circuit includes a light source driver. The light source driver is electrically connected to the microcontroller. Moreover, the light receiving-side circuit includes a light receiving-side integrated circuit. The light receiving-side integrated circuit is electrically connected to the microcontroller. Moreover, the microcontroller is configured to transmit the light transmitting-side start-up signal to the light source driver to start the light source driver, and after the microcontroller transmits the light transmitting-side start-up signal to the light source driver, the microcontroller is configured to transmit the light receiving-side start-up signal to the light receiving-side integrated circuit after the first delay duration to start the light receiving-side integrated circuit.

Moreover, in an embodiment of the optical transceiver module of the present disclosure mentioned above, the light transmitting-side circuit further includes a light source component. The light source component is electrically connected to the light source driver. Moreover, after the light source driver is started by the light transmitting-side start-up signal, the light source driver is configured to transmit a light source component start-up signal to the light source component to start the light source component.

Moreover, in an embodiment of the optical transceiver module of the present disclosure mentioned above, the light receiving-side circuit further includes a light-receiving component. The light-receiving component is electrically connected to the microcontroller and the light receiving-side integrated circuit. Moreover, after the microcontroller transmits the light receiving-side start-up signal to the light receiving-side integrated circuit, the microcontroller is configured to transmit a light-receiving component start-up signal to the light-receiving component after a second delay duration to start the light-receiving component.

Moreover, in an embodiment of the optical transceiver module of the present disclosure mentioned above, a total start-up duration required from a start-up of the light source driver to a start-up completion of the light-receiving component is two seconds. The first delay duration is three hundred milliseconds. The second delay duration is two hundred milliseconds.

Moreover, in an embodiment of the optical transceiver module of the present disclosure mentioned above, the light source driver is a laser diode driver. The light receiving-side integrated circuit is a preamplifier.

Moreover, in an embodiment of the optical transceiver module of the present disclosure mentioned above, the light source component is a laser diode.

Moreover, in an embodiment of the optical transceiver module of the present disclosure mentioned above, the light-receiving component is a photodiode.

In order to achieve the another object of the present disclosure mentioned above, the optical transceiver module start-up method of the present disclosure includes following steps: A microcontroller transmits a light transmitting-side start-up signal to a light transmitting-side circuit to start the light transmitting-side circuit. After the microcontroller transmits the light transmitting-side start-up signal to the light transmitting-side circuit, the microcontroller transmits a light receiving-side start-up signal to a light receiving-side circuit after a first delay duration to start the light receiving-side circuit.

In order to achieve the still another object of the present disclosure mentioned above, the optical transceiver module start-up method of the present disclosure includes following steps: A microcontroller transmits a light transmitting-side start-up signal to a light source driver to start the light source driver. After the light source driver is started by the light transmitting-side start-up signal, the light source driver transmits a light source component start-up signal to a light source component to start the light source component. After the microcontroller transmits the light transmitting-side start-up signal to the light source driver, the microcontroller transmits a light receiving-side start-up signal to a light receiving-side integrated circuit after a first delay duration to start the light receiving-side integrated circuit. After the microcontroller transmits the light receiving-side start-up signal to the light receiving-side integrated circuit, the microcontroller transmits a light-receiving component start-up signal to a light-receiving component after a second delay duration to start the light-receiving component.

The advantage of the present disclosure is to reduce the start-up inrush currents of the optical transceiver module.

Please refer to the detailed descriptions and figures of the present disclosure mentioned below for further understanding technologies, methods, and effects and achieving the predetermined purposes of the present disclosure. Further, the purposes, characteristics, and features of the present disclosure may be more deeply and specifically understood. However, the drawings are provided only for references and descriptions and not intended to limit the scope of the present disclosure.

### BRIEF DESCRIPTION OF THE DRAWINGS

Fig. 1 shows a block diagram of the optical transceiver module of the present disclosure.
Fig. 2 shows a waveform diagram of the inrush current generated at the start-up moment of the related art optical transceiver module.
Fig. 3 shows a waveform diagram of the inrush current generated at the start-up moment of the optical transceiver module of the present disclosure.
Fig. 4 shows a flow chart of the optical transceiver module start-up method according to the first embodiment of the present disclosure.
Fig. 5 shows a flow chart of the optical transceiver module start-up method according to the second embodiment of the present disclosure.

### DETAILED DESCRIPTION

In the present disclosure, numerous specific details are provided, to provide a comprehensive understanding of embodiments of the present disclosure. However, those skilled in the art may understand that the present disclosure may be practiced without one or more of these specific details. In other instances, well-known details are not shown or described to avoid obscuring features of the present disclosure. The technical content and the detailed description of the present disclosure are as follows with reference to the figures.

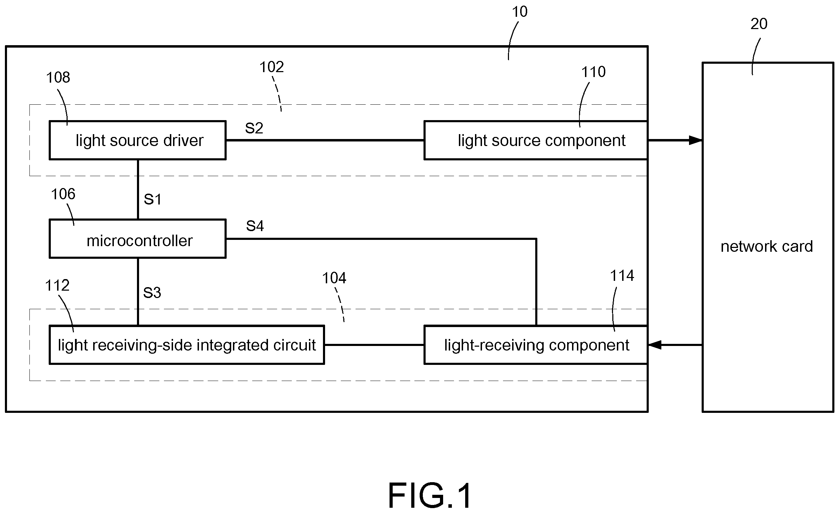

Fig. 1 shows a block diagram of the optical transceiver module 10 of the present disclosure. The optical transceiver module 10 of the present disclosure includes a light transmitting-side circuit 102, a light receiving-side circuit 104, and a microcontroller 106. The light transmitting-side circuit 102 includes a light source driver 108 and a light source component 110. The light receiving-side circuit 104 includes a light receiving-side integrated circuit 112 and a light-receiving component 114. The above-mentioned components are electrically connected to each other. The optical transceiver module 10 may be, for example but not limited to, applied to a network card 20. The network card 20 is connected to an instrument (not shown in Fig. 1) or a computer (not shown in Fig. 1).

The light source driver 108 is, for example but not limited to, a laser diode driver. The light source component 110 is, for example but not limited to, a laser diode. The light receiving-side integrated circuit 112 is, for example but not limited to, a preamplifier. The light-receiving component 114 is, for example but not limited to, a photodiode.

In the present disclosure, because the duration required for the electrical signal (namely, the start-up signals described below) to be transmitted between two components is much shorter than the delay durations described below, the duration required for the start-up signals to be transmitted between two components may be ignored. The duration required for the component to be started by the start-up signal after receiving the start-up signal is also much shorter than the delay durations, so the duration required for the component to be started by the start-up signal after receiving the start-up signal may also be ignored.

When the optical transceiver module 10 of the present disclosure is started, firstly the microcontroller 106 is configured to transmit a light transmitting-side start-up signal S1 to the light source driver 108 of the light transmitting-side circuit 102 to start the light source driver 108 of the light transmitting-side circuit 102, and immediately after the light source driver 108 is started by the light transmitting-side start-up signal S1, the light source driver 108 is configured to transmit a light source component start-up signal S2 to the light source component 110 to start the light source component 110.

Then, after the microcontroller 106 transmits the light transmitting-side start-up signal S1 to the light source driver 108 of the light transmitting-side circuit 102, the microcontroller 106 is configured to transmit a light receiving-side start-up signal S3 to the light receiving-side integrated circuit 112 of the light receiving-side circuit 104 after a first delay duration (for example, three hundred milliseconds) to start the light receiving-side integrated circuit 112 of the light receiving-side circuit 104.

Finally, after the microcontroller 106 transmits the light receiving-side start-up signal S3 to the light receiving-side integrated circuit 112, the microcontroller 106 is configured to transmit a light-receiving component start-up signal S4 to the light-receiving component 114 after a second delay duration (for example, two hundred milliseconds) to start the light-receiving component 114.

In other words, when the optical transceiver module 10 of the present disclosure is started, the start-up (namely, power-on) sequence of the above-mentioned components of the optical transceiver module 10 is: the light source driver 108, the light source component 110, the light receiving-side integrated circuit 112, and the light-receiving component 114.

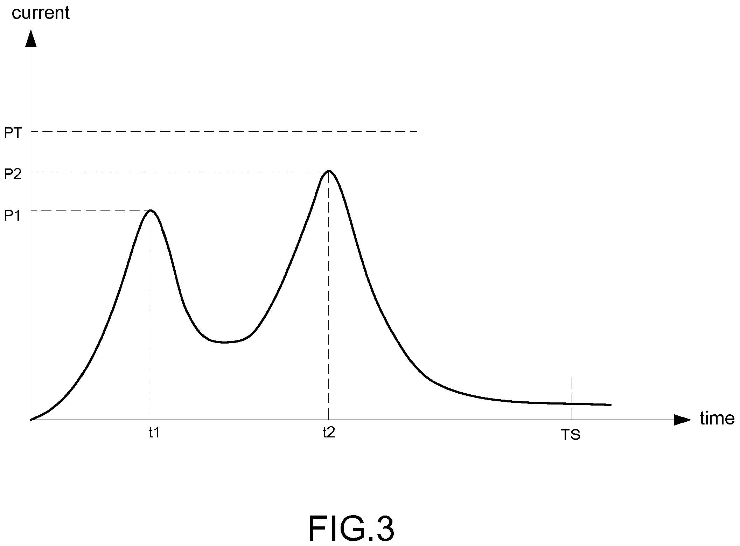

Fig. 3 shows a waveform diagram of the inrush current generated at the start-up moment of the optical transceiver module 10 of the present disclosure. Please refer to Fig. 1 and Fig. 2 as well. For the related art optical transceiver module, the start-up sequence of the components is: the preamplifier of the light-receiving part, the photodiode of the light-receiving part, the laser diode driver of the light-transmitting part, and the laser diode of the light-transmitting part; the total start-up duration TS (as shown in Fig. 2) required from the start-up of the preamplifier to the start-up completion of the laser diode may be, for example, one second; the peak value of the inrush current at the first timing point t1 is the third peak value P3. Because the third peak value P3 is too high (for example, higher than the peak threshold value PT), therefore when the related art optical transceiver module is started, the instrument or the computer connected to the related art optical transceiver module through the network card is shut down for protection.

For the optical transceiver module 10 of the present disclosure, a total start-up duration TS (as shown in Fig. 3) required from a start-up of the light source driver 108 to a start-up completion of the light-receiving component 114 may be, for example but not limited to, two seconds. A peak value of the inrush current at the first timing point t1 is a first peak value P1, and then another peak value of the inrush current at the second timing point t2 is a second peak value P2, wherein the second peak value P2 is higher than the first peak value P1.

Although the total start-up duration TS of the optical transceiver module 10 of the present disclosure is longer than the total start-up duration TS of the related art optical transceiver module, the first peak value P1 of the present disclosure is lower than the peak threshold value PT, and the second peak value P2 is also lower than the peak threshold value PT, so when the optical transceiver module 10 of the present disclosure is started, the instrument or the computer connected to the optical transceiver module 10 of the present disclosure through the network card 20 is not shut down, wherein the excessive inrush current causes the instrument (or the computer) to shut down.

The reason why the first peak value P1 and the second peak value P2 of the present disclosure may be lower than the peak threshold value PT is that the optical transceiver module 10 of the present disclosure first starts the light transmitting-side circuit 102 and then starts the light receiving-side circuit 104. In more detail, because the power consumption of the light transmitting-side circuit 102 (namely, the light source driver 108 and the light source component 110) is lower (lower than the power consumption of the light receiving-side circuit 104 (namely, the light receiving-side integrated circuit 112 and the light-receiving component 114)), the first peak value P1 generated by the start-up of the light transmitting-side circuit 102 is lower. And, the light transmitting-side circuit 102 is a circuit that consumes more power when there is a light signal that needs to be transmitted (namely, less power is consumed when there is no light signal that needs to be transmitted). Therefore, after the light transmitting-side circuit 102 is started and the first peak value P1 is generated, since there is no light signal that needs to be transmitted, the inrush current decreases. Then, because the inrush current generated by the light transmitting-side circuit 102 has gradually decreased, the second peak value P2 mainly generated by the start-up of the light receiving-side circuit 104 (namely, the light receiving-side integrated circuit 112 and the light-receiving component 114) may also be lower than the peak threshold value PT.

In contrast, the reason why the third peak value P3 of the related art optical transceiver module is higher than the peak threshold value PT is that the related art optical transceiver module first starts the light-receiving part (namely, the preamplifier and the laser diode) and then starts the light-transmitting part (namely, the laser diode driver and the laser diode). In more detail, the power consumption of the light-receiving part is higher (higher than the power consumption of the light-transmitting part), and the light-receiving part is a circuit that always consumes power to receive light signals once the light-receiving part is started. Therefore, after the light-receiving part is started first, the generated inrush current is continued to be pushed up by the light-transmitting part that is started subsequently, and finally the third peak value P3 higher than the peak threshold value PT is generated.

Moreover, the power consumed by the optical transceiver module 10 of the present disclosure within the total start-up duration TS is approximately equal to the power consumed by the related art optical transceiver module within the total start-up duration TS. Namely, the area under the inrush current waveform of Fig. 3 is approximately equal to the area under the inrush current waveform of Fig. 2. Although the total start-up duration TS of the optical transceiver module 10 of the present disclosure is longer than the total start-up duration TS of the related art optical transceiver module, the start-up inrush current of the optical transceiver module 10 of the present disclosure may be decreased (less than the start-up inrush current of the related art optical transceiver module) to avoid the instrument (or the computer) shutting down.

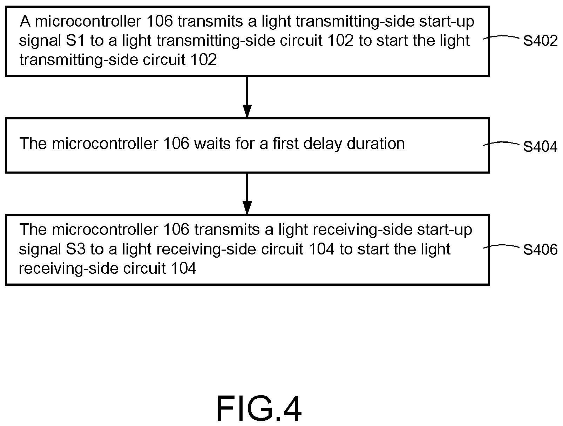

Fig. 4 shows a flow chart of the optical transceiver module start-up method according to the first embodiment of the present disclosure. Please refer to Fig. 1 as well. The optical transceiver module start-up method of the present disclosure includes following steps:
Step S402: A microcontroller 106 transmits a light transmitting-side start-up signal S1 to a light transmitting-side circuit 102 to start the light transmitting-side circuit 102. Then, the optical transceiver module start-up method goes to the Step S404.
Step S404: The microcontroller 106 waits for a first delay duration. Then, the optical transceiver module start-up method goes to the Step S406.
Step S406: The microcontroller 106 transmits a light receiving-side start-up signal S3 to a light receiving-side circuit 104 to start the light receiving-side circuit 104.

The remaining technical contents of the first embodiment of the optical transceiver module start-up method of the present disclosure are the same as the technical contents of the optical transceiver module 10 of the present disclosure mentioned above, and therefore are not described again.

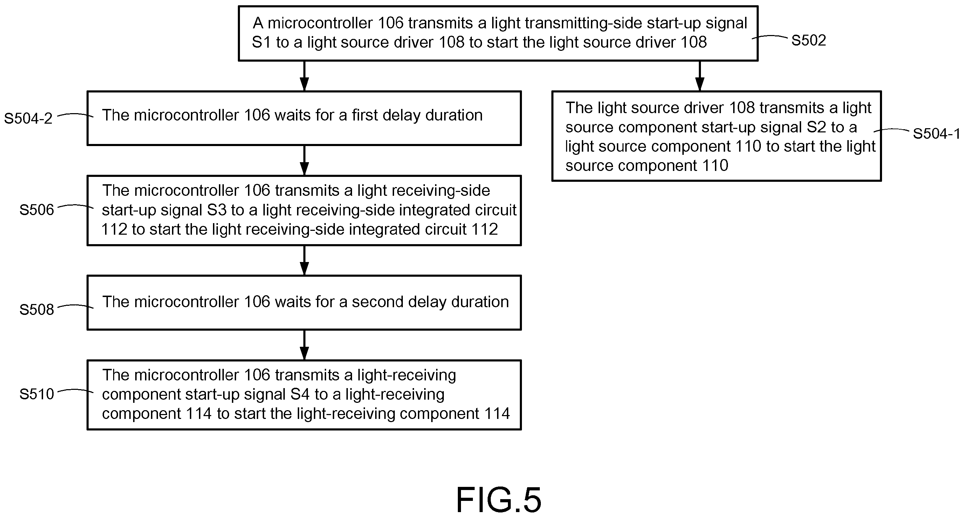

Fig. 5 shows a flow chart of the optical transceiver module start-up method according to the second embodiment of the present disclosure. Please refer to Fig. 1 as well. The optical transceiver module start-up method of the present disclosure includes following steps:
Step S502: A microcontroller 106 transmits a light transmitting-side start-up signal S1 to a light source driver 108 to start the light source driver 108. Then, the optical transceiver module start-up method goes to the Step S504-1 and the Step S504-2.
Step S504-1: The light source driver 108 transmits a light source component start-up signal S2 to a light source component 110 to start the light source component 110.
Step S504-2: The microcontroller 106 waits for a first delay duration. Then, the optical transceiver module start-up method goes to the Step S506.
Step S506: The microcontroller 106 transmits a light receiving-side start-up signal S3 to a light receiving-side integrated circuit 112 to start the light receiving-side integrated circuit 112. Then, the optical transceiver module start-up method goes to the Step S508.
Step S508: The microcontroller 106 waits for a second delay duration. Then, the optical transceiver module start-up method goes to the Step S510.
Step S510: The microcontroller 106 transmits a light-receiving component start-up signal S4 to a light-receiving component 114 to start the light-receiving component 114.

The remaining technical contents of the second embodiment of the optical transceiver module start-up method of the present disclosure are the same as the technical contents of the optical transceiver module 10 of the present disclosure mentioned above, and therefore are not described again.

The advantage of the present disclosure is to reduce the start-up inrush currents of the optical transceiver module.

## Claims

1. An optical transceiver module (10) **characterized by** comprising:
a light transmitting-side circuit (102);
a light receiving-side circuit (104); and
a microcontroller (106) electrically connected to the light transmitting-side circuit (102) and the light receiving-side circuit (104),
wherein the microcontroller (106) is configured to transmit a light transmitting-side start-up signal (S1) to the light transmitting-side circuit (102) to start the light transmitting-side circuit (102), and after the microcontroller (106) transmits the light transmitting-side start-up signal (S 1) to the light transmitting-side circuit (102), the microcontroller (106) is configured to transmit a light receiving-side start-up signal (S3) to the light receiving-side circuit (104) after a first delay duration to start the light receiving-side circuit (104).

2. The optical transceiver module (10) of claim 1, wherein the light transmitting-side circuit (102) comprises:
a light source driver (108) electrically connected to the microcontroller (106),
wherein the light receiving-side circuit (104) comprises:
a light receiving-side integrated circuit (112) electrically connected to the microcontroller (106),
wherein the microcontroller (106) is configured to transmit the light transmitting-side start-up signal (S1) to the light source driver (108) to start the light source driver (108), and after the microcontroller (106) transmits the light transmitting-side start-up signal (S1) to the light source driver (108), the microcontroller (106) is configured to transmit the light receiving-side start-up signal (S3) to the light receiving-side integrated circuit (112) after the first delay duration to start the light receiving-side integrated circuit (112).

3. The optical transceiver module (10) of claim 2, wherein the light transmitting-side circuit (102) further comprises:
a light source component (110) electrically connected to the light source driver (108),
wherein after the light source driver (108) is started by the light transmitting-side start-up signal (S1), the light source driver (108) is configured to transmit a light source component start-up signal (S2) to the light source component (110) to start the light source component (110).

4. The optical transceiver module (10) of claim 3, wherein the light receiving-side circuit (104) further comprises:
a light-receiving component (114) electrically connected to the microcontroller (106) and the light receiving-side integrated circuit (112),
wherein after the microcontroller (106) transmits the light receiving-side start-up signal (S3) to the light receiving-side integrated circuit (112), the microcontroller (106) is configured to transmit a light-receiving component start-up signal (S4) to the light-receiving component (114) after a second delay duration to start the light-receiving component (114).

5. The optical transceiver module (10) of claim 4, wherein a total start-up duration (TS) required from a start-up of the light source driver (108) to a start-up completion of the light-receiving component (114) is two seconds; the first delay duration is three hundred milliseconds; the second delay duration is two hundred milliseconds.

6. The optical transceiver module (10) of claim 2, wherein the light source driver (108) is a laser diode driver; the light receiving-side integrated circuit (112) is a preamplifier.

7. The optical transceiver module (10) of claim 3, wherein the light source component (110) is a laser diode.

8. The optical transceiver module (10) of claim 4, wherein the light-receiving component (114) is a photodiode.

9. An optical transceiver module start-up method comprising:
transmitting a light transmitting-side start-up signal (S1) to a light transmitting-side circuit (102) to start the light transmitting-side circuit (102) by a microcontroller (106) (S402); and
transmitting a light receiving-side start-up signal (S3) to a light receiving-side circuit (104) after a first delay duration (S404) to start the light receiving-side circuit (104) by the microcontroller (106) (S406) after the microcontroller (106) transmits the light transmitting-side start-up signal (S1) to the light transmitting-side circuit (102).

10. An optical transceiver module start-up method comprising:
transmitting a light transmitting-side start-up signal (S1) to a light source driver (108) to start the light source driver (108) by a microcontroller (106) (S502);
transmitting a light source component start-up signal (S2) to a light source component (110) to start the light source component (110) by the light source driver (108) (S504-1) after the light source driver (108) is started by the light transmitting-side start-up signal (S1);
transmitting a light receiving-side start-up signal (S3) to a light receiving-side integrated circuit (112) after a first delay duration (S504-2) to start the light receiving-side integrated circuit (112) by the microcontroller (106) (S506) after the microcontroller (106) transmits the light transmitting-side start-up signal (S1) to the light source driver (108); and
transmitting a light-receiving component start-up signal (S4) to a light-receiving component (114) after a second delay duration (S508) to start the light-receiving component (114) by the microcontroller (106) (S510) after the microcontroller (106) transmits the light receiving-side start-up signal (S3) to the light receiving-side integrated circuit (112).

## Amended claims

### Amended claims in accordance with Rule 137(2) EPC.

1. An optical transceiver module (10) comprising:
a light transmitting-side circuit (102);
a light receiving-side circuit (104); and
a microcontroller (106) electrically connected to the light transmitting-side circuit (102) and the light receiving-side circuit (104),
wherein the microcontroller (106) is configured to transmit a light receiving-side start-up signal (S3) to the light receiving-side circuit (104) after a first delay duration to start the light receiving-side circuit (104);
**characterized in that:**
the microcontroller (106) is configured to transmit a light transmitting-side start-up signal (S1) to the light transmitting-side circuit (102) to start the light transmitting-side circuit (102), and after the microcontroller (106) transmits the light transmitting-side start-up signal (S1) to the light transmitting-side circuit (102);
and that the light transmitting-side circuit (102) comprises a light source driver (108) electrically connected to the microcontroller (106);
and that the light receiving-side circuit (104) comprises:
a light receiving-side integrated circuit (112) electrically connected to the microcontroller (106); and
a light-receiving component (114) electrically connected to the microcontroller (106) and the light receiving-side integrated circuit (112),
wherein the microcontroller (106) is configured to transmit the light transmitting-side start-up signal (S1) to the light source driver (108) to start the light source driver (108), and after the microcontroller (106) transmits the light transmitting-side start-up signal (S1) to the light source driver (108), the microcontroller (106) is configured to transmit the light receiving-side start-up signal (S3) to the light receiving-side integrated circuit (112) after the first delay duration to start the light receiving-side integrated circuit (112); and
wherein after the microcontroller (106) transmits the light receiving-side start-up signal (S3) to the light receiving-side integrated circuit (112), the microcontroller (106) is configured to transmit a light-receiving component start-up signal (S4) to the light-receiving component (114) after a second delay duration to start the light-receiving component (114).

2. The optical transceiver module (10) of claim 1, wherein the light transmitting-side circuit (102) further comprises:
a light source component (110) electrically connected to the light source driver (108),
wherein after the light source driver (108) is started by the light transmitting-side start-up signal (S1), the light source driver (108) is configured to transmit a light source component start-up signal (S2) to the light source component (110) to start the light source component (110).

3. The optical transceiver module (10) of claim 1, wherein a total start-up duration (TS) required from a start-up of the light source driver (108) to a start-up completion of the light-receiving component (114) is two seconds; the first delay duration is three hundred milliseconds; the second delay duration is two hundred milliseconds.

4. The optical transceiver module (10) of claim 1, wherein the light source driver (108) is a laser diode driver; the light receiving-side integrated circuit (112) is a preamplifier.

5. The optical transceiver module (10) of claim 2, wherein the light source component (110) is a laser diode.

6. The optical transceiver module (10) of claim 1, wherein the light-receiving component (114) is a photodiode.

7. An optical transceiver module start-up method comprising:
transmitting a light transmitting-side start-up signal (S1) to a light source driver (108) to start the light source driver (108) by a microcontroller (106) (S502);
transmitting a light source component start-up signal (S2) to a light source component (110) to start the light source component (110) by the light source driver (108) (S504-1) after the light source driver (108) is started by the light transmitting-side start-up signal (S1);
transmitting a light receiving-side start-up signal (S3) to a light receiving-side integrated circuit (112) after a first delay duration (S504-2) to start the light receiving-side integrated circuit (112) by the microcontroller (106) (S506) after the microcontroller (106) transmits the light transmitting-side start-up signal (S1) to the light source driver (108); and
transmitting a light-receiving component start-up signal (S4) to a light-receiving component (114) after a second delay duration (S508) to start the light-receiving component (114) by the microcontroller (106) (S510) after the microcontroller (106) transmits the light receiving-side start-up signal (S3) to the light receiving-side integrated circuit (112).
